# EUROPÄISCHE PATENTANMELDUNG

(11) **EP 1 775 512 A1**
(43) Veröffentlichungstag der Anmeldung: **18.04.2007**
(21) Anmeldenummer: 06020660.4
(22) Anmeldetag: 30.09.2006
(51) Int. Cl.: F21S 8/10, F21S 8/00

(54) **Leuchteneinheit für Fahrzeuge, vorzugsweise Heckleuchte für Kraftfahrzeuge**

(30) Priorität: 11.10.2005 DE 102005050011
(71) Anmelder: Schefenacker Vision Systems Germany GmbH, 71409 Schwaikheim (DE)
(72) Erfinder: Gutjahr, Frank, 73240 Wendlingen (DE); Fink, Thorsten, 73095 Albershausen (DE)
(74) Vertreter: Jackisch-Kohl, Anna-Katharina

(57) **Zusammenfassung**

Die Leuchteneinheit für Fahrzeuge hat ein Gehäuse (1), in dem mindestens ein Leuchtmittel (2,3) untergebracht ist, das hinter einer Lichtscheibe (4) liegt. Die Leuchteneinheit hat ferner wenigstens eine elektrolumineszierende Schicht (12 bis 15). Damit die Leuchteneinheit so kostengünstig hergestellt werden kann, daß eine gewünschte, insbesondere homogene Lichtverteilung zuverlässig erreicht wird, ist die elektrolumineszierende Schicht (12 bis 15) an der Lichtscheibe (4) vorgesehen. Dadurch können die für die Leuchtmittel (2,3) im Gehäuse (1) notwendigen Bauteile (5,6), wie Reflektoren, ohne Einschränkung genutzt werden. Die elektrolumineszierende Schicht (12 bis 15) läßt sich problemlos an der Lichtscheibe (4) anordnen. Die Leuchteneinheit ist vorzugsweise eine Heckleuchte für Kraftfahrzeuge.

## Beschreibung

Die Erfindung betrifft eine Leuchteneinheit, vorzugsweise eine Heckleuchte, für Fahrzeuge, vorzugsweise für Kraftfahrzeuge, nach dem Oberbegriff des Anspruches 1 bzw. 10.

Bei Leuchteneinheiten, wie Heckleuchten von Kraftfahrzeugen, werden als Leuchtmittel Glühbirnen und/oder LEDs eingesetzt. Mit diesen Leuchtmitteln kann kein homogenes Licht erzeugt werden, da die Leuchtmittel sogenannte Punktstrahler sind. Um eine bessere homogene Lichtverteilung zu erreichen, sind Lichtleiter bekannt, in die seitlich mittels LEDs Licht eingeleitet wird. Es wird im Lichtleiter bis zu einer Auslaßstelle geleitet. Mit solchen Lichtleitern kann eine gänzlich homogene Lichtverteilung nur annähernd erreicht werden.

Es ist ferner bekannt, zusätzlich zu diesen Leuchtmitteln in der Leuchteneinheit elektrolumineszierende Schichten vorzusehen. Sie werden auf dem Reflektor für die Glühlampen oder auf Linsenhalterungen vorgesehen. Die Herstellung solcher Leuchteneinheiten ist allerdings aufwendig, insbesondere wenn die elektrolumineszierende Schicht am Reflektor vorgesehen ist. Da mittels des Reflektors das von der Glühlampe ausgesandte Licht möglichst vollständig zur Lichtscheibe reflektiert werden soll, müssen die elektrolumineszierenden Schichten teildurchlässig ausgebildet sein, damit auch der von den elektrolumineszierenden Schichten bedeckte Teil des Reflektors zur Reflexion der Glühlampenstrahlung ausgenutzt werden kann.

Der Erfindung liegt die Aufgabe zugrunde, die gattungsgemäße Leuchteneinheit so auszubilden, daß sie kostengünstig so hergestellt werden kann, daß eine gewünschte, insbesondere homogene Lichtverteilung zuverlässig erreicht wird.

Diese Aufgabe wird bei der gattungsgemäßen Leuchteneinheit erfindungsgemäß mit den kennzeichnenden Merkmalen des Anspruches 1 bzw. 10 erreicht.

Bei der Leuchteneinheit gemäß Anspruch 1 ist die elektrolumineszierende Schicht an der Lichtscheibe vorgesehen. Dadurch können die für die Leuchtmittel im Gehäuse notwendigen Bauteile, wie Reflektoren, ohne Einschränkung genutzt werden. Die elektrolumineszierende Schicht läßt sich problemlos an der Lichtscheibe anordnen, so daß die erfindungsgemäße Leuchteneinheit einfach und kostengünstig hergestellt werden kann.

Bei der Leuchteneinheit gemäß Anspruch 10 ist die elektrolumineszierende Schicht hinterspritzt. In diesem Falle kann vorteilhaft in den hinterspritzten Bereich der zum Betrieb der elektrolumineszierenden Schicht notwendige Inverter untergebracht werden, der in diesem Bereich eingebettet und damit optimal geschützt ist.

Durch die Kombination des Standardleuchtmittels zur Erfüllung der gesetzlichen Vorgaben und der elektrolumineszierenden Schicht kann ein großflächig homogenes Licht erreicht werden. Je nach Art der elektrolumineszierenden Schicht können gewünschte Lichteffekte realisiert werden, so daß der Leuchtenhersteller beispielsweise die Möglichkeit hat, als Unterscheidungsmerkmal im Sinne eines zum Beispiel Corporate Identity unterschiedliche Effekte bei seinen Leuchteneinheiten zu erzielen, beispielsweise je nach Wagentype. Durch den Einsatz der Leuchtmittel und der elektrolumineszierenden Schicht, die an der Lichtscheibe selbst vorgesehen ist, wird auch die Leuchtausbeute erhöht.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: eine erfindungsgemäße Leuchteneinheit in Ansicht und in unbeleuchtetem Zustand,
- Fig. 1a: die Leuchteneinheit gemäß Fig. 1 in beleuchtetem Zustand,
- Fig. 2: in einer Darstellung entsprechend Fig. 1 eine zweite Ausführungsform einer erfindungsgemäßen Leuchteneinheit in unbeleuchtetem Zustand,
- Fig. 2a: die Leuchteneinheit gemäß Fig. 2 in beleuchtetem Zustand,
- Fig. 3: in schematischer Darstellung einen Schnitt durch die erfindungsgemäße Leuchteneinheit gemäß Fig. 1,
- Fig. 4 und Fig. 5: jeweils einen Schnitt durch weitere Ausführungsformen von erfindungsgemäßen Leuchteneinheit.

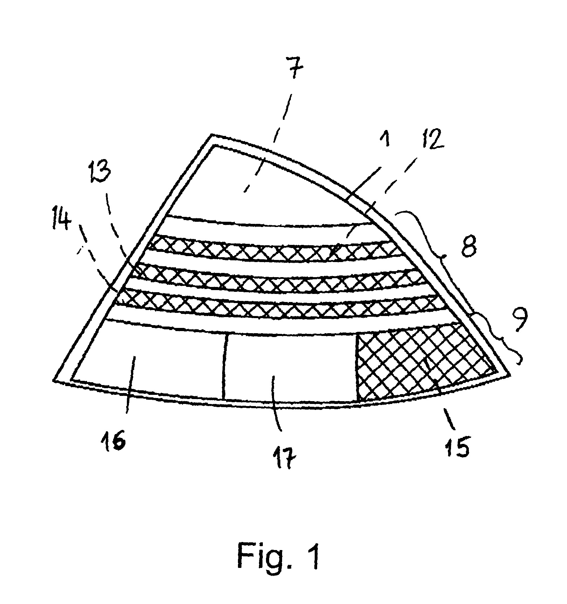

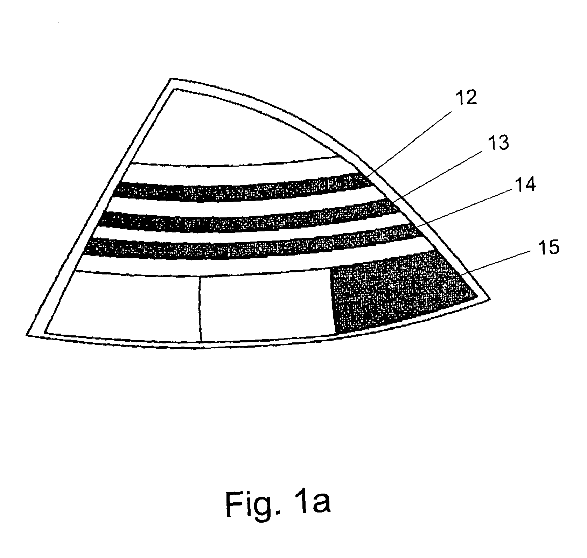

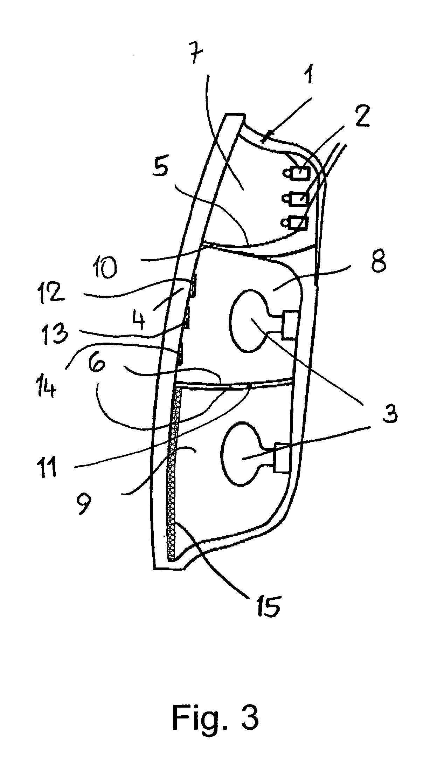

Die Leuchteneinheiten sind im Ausführungsbeispiel Heckleuchten, die vorteilhaft bei Kraftfahrzeugen eingesetzt werden. Sie können aber selbstverständlich auch für andere Landfahrzeuge verwendet werden. Die Heckleuchte gemäß den Fig. 1 und 1a hat ein Gehäuse 1, in dem Leuchtmittel 2, 3 untergebracht sind (Fig. 3). Die Leuchtmittel 2 sind LEDs, während die Leuchtmittel 3 durch Glühlampen gebildet sind. Diese Leuchtmittel 2, 3 sind nur beispielhaft angegeben. Als Leuchtmittel können beispielsweise auch Halogenleuchten, Xenonleuchten und dergleichen eingesetzt werden. In Fig. 3 sind beispielhaft zwei unterschiedliche Arten von Leuchtmitteln 2, 3 im Gehäuse 1 untergebracht. Es ist selbstverständlich möglich, im Gehäuse 1 nur eine Art von Leuchtmittel zu verwenden.

Das Gehäuse 1 ist an der Lichtaustrittsseite durch eine Lichtscheibe 4 geschlossen, hinter der sich die Leuchtmittel 2, 3 mit Abstand befinden. Den Leuchtmitteln 2, 3 können Reflektoren 5, 6 zugeordnet sein, die das von den Leuchtmitteln 2, 3 ausgesandte Licht in Richtung auf die Lichtscheibe 4 reflektieren.

Bei der Ausführungsform gemäß den Fig. 1, 1a hat das Gehäuse 1 etwa dreieckförmigen Umriß. Je nach Fahrzeugart, bei der die Heckleuchte eingesetzt werden soll, kann das Gehäuse 1 auch anderen Umriß, beispielsweise rechteckigen Umriß, haben. Der Innenraum des Gehäuses 1 ist bei der Ausführungsform nach den Fig. 1, 1a und 3 in Kammern 7 bis 9 unterteilt, die übereinander angeordnet sind. In der oberen Kammer 7 sind die Leuchtmittel 2 untergebracht, die beispielhaft übereinander angeordnet sind. In der Kammer 7 können die Leuchtmittel 2 nicht nur übereinander, sondern auch nebeneinander angeordnet sein. Die Leuchtmittel 2 können aber auch gleichmäßig verteilt an der Rückwand der Kammer 7 angeordnet sein.

Die mittlere Kammer 8 ist durch eine Zwischenwand 10 von der oberen Kammer 7 und durch eine Zwischenwand 11 von der unteren Kammer 9 getrennt. Innerhalb der Kammer 8 sind an der Innenseite der Lichtscheibe 4 mit Abstand übereinander streifenförmige Elektrolumineszenzfolien 12 bis 14 befestigt. Sie können, wie dargestellt, gleiche Breite haben, je nach gewünschtem Einsatzfall und Verwendungszweck der Heckleuchte aber auch unterschiedlich breit sein. Die Elektrolumineszenzfolien 12 bis 14 erstrecken sich über die gesamte Breite der Kammer 8 zwischen einander gegenüberliegenden Rändern des Gehäuses 1.

In der unteren Kammer 9 ist an der Innenseite der Lichtscheibe 4 im Eckbereich eine weitere Elektrolumineszenzfolie 15 befestigt, die sich über die Höhe der Kammer 9 erstreckt (Fig. 1) und eine Länge hat, die etwa einem Drittel der Länge der Kammer 9 entspricht. Die Elektrolumineszenzfolie 15 hat eckigen Umriß und erstreckt sich von dem in Fig. 1 rechten unteren Eckbereich der Lichtscheibe 4 aus.

Die Elektrolumineszenzfolien 12 bis 15 erzeugen jeweils über ihre Fläche ein homogenes Licht, während die Leuchtmittel 2, 3 das Licht punktförmig abstrahlen. Durch die Kombination dieser unterschiedlichen Leuchtmittel 2, 3 und 12 bis 15 wird erreicht, daß zum einen die gesetzlichen Vorgaben hinsichtlich der Leuchtstärke der Heckleuchte erfüllt werden, zum anderen eine flächige Lichtstrahlung erzeugt wird. Durch Verwendung der Elektrolumineszenzfolien 12 bis 15 kann die Heckleuchte mit einem gewünschten Lichtdesign ausgestattet werden, um beispielsweise unterschiedliche Fahrzeugtypen durch unterschiedliche Designgestaltung der Heckleuchte voneinander zu unterscheiden. Die Elektrolumineszenzfolien können unterschiedlich ausgeführt sein, um beispielsweise einen Fluoreszenz- oder einen Glimmereffekt zu erreichen. Die für solche Effekte notwendige Elektrolumineszenzfolien sind bekannt und werden darum auch nicht näher erläutert.

Vorteilhaft ist es, wenn die Elektrolumineszenzfolien 12 bis 15 unabhängig von den Leuchtmitteln 2, 3 ein- und ausgeschaltet werden können. Die Elektrolumineszenzfolien 12 bis 15 können auch in unterschiedlichen Leuchtfarben hergestellt werden, so daß beispielsweise die Elektrolumineszenzfolien 12 bis 14 Licht in einem anderen Farbton abstrahlen als die Elektrolumineszenzfolie 15. Außerdem können die Elektrolumineszenzfolien 12 bis 15 in ausgeschaltetem Zustand so gestaltet sein, daß sie eine bestimmte Auflichtfarbe aufweisen, die durch die Lichtscheibe 4 der Heckleuchte erkennbar ist.

Die Leuchtmittel 3 in der mittleren Kammer 8 strahlen ihr Licht im Bereich zwischen den streifenförmigen Elektrolumineszenzfolien 12 bis 14 durch die Lichtscheibe 4 nach außen. Wie Fig. 3 zeigt, befindet sich das Leuchtmittel 3 mittig hinter den Elektrolumineszenzfolien 12 bis 14.

Die Leuchtmittel 3 in der unteren Kammer 4 sind so angeordnet, daß der größte Teil des von ihnen ausgesandten Lichtes an der Elektrolumineszenzfolie 15 vorbei durch die Lichtscheibe 4 nach außen abgestrahlt wird. Wie sich aus Fig. 1 ergibt, ist die Lichtscheibe 4 im Bereich der unteren Kammer 9 in drei etwa gleich große Leuchtbereiche 16, 17, 18 unterteilt, die unterschiedlichen Signalfunktionen der Heckleuchte zugeordnet sein können.

Fig. 1 zeigt die Heckleuchte in nicht bestromtem Zustand. Durch die Lichtscheibe 4 hindurch sind die streifenförmigen Elektrolumineszenzfolien 12 bis 14 sowie die rechteckige Elektrolumineszenzfolie 15 zu erkennen. Ihre Auflichtfarbe, die sie bei nicht beschaltetem Zustand aufweisen, kann vom Designer der Heckleuchte eingestellt werden, um ein gewünschtes Design der Heckleuchte zu erreichen.

Wird die Heckleuchte bestromt, dann leuchten die Elektrolumineszenzfolien 12 bis 15 in dem jeweiligen Farbton (Fig. 1a). Die Heckleuchte erhält somit ein besonderes Erscheinungsbild. Da die Elektrolumineszenzfolien 12 bis 15 vorteilhaft unabhängig von den Leuchtmitteln 2, 3 eingeschaltet werden können, kann der beleuchtete Zustand gemäß Fig. 1a erreicht werden, indem lediglich die Elektrolumineszenzfolien 12 bis 15 eingeschaltet werden.

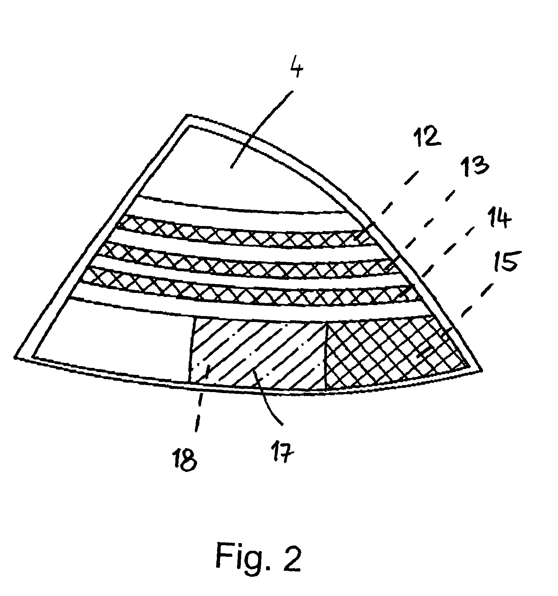

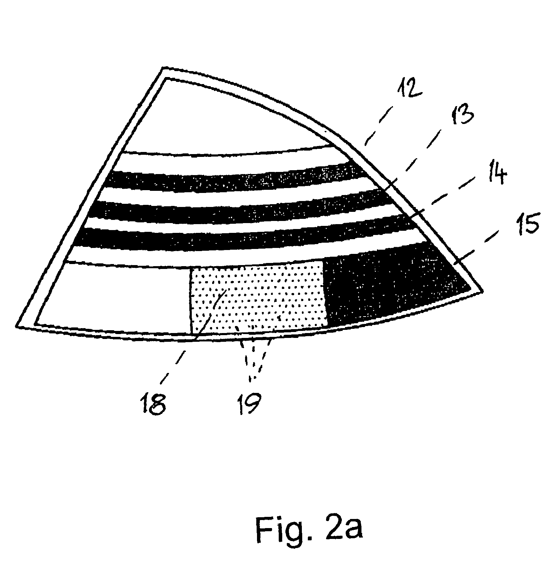

Die Fig. 2, 2a zeigen eine Ausführungsform, bei der auch im Lichtscheibenbereich 17 an der Innenseite der Lichtscheibe 4 eine Elektrolumineszenzfolie 18 vorgesehen ist. Im übrigen ist die Heckleuchte gleich ausgebildet wie das vorige Ausführungsbeispiel. Fig. 2 zeigt die Heckleuchte in nicht bestromtem Zustand. Durch die Lichtscheibe 4 hindurch sind die streifenförmigen Elektrolumineszenzfolien 12 bis 14 sowie die im unteren Bereich befindlichen Elektrolumineszenzfolien 15 und 18 erkennbar. Die Elektrolumineszenzfolie 18 hat etwa rechteckigen Umriß. Sind die Folien nicht bestromt, dann sind sie durch die Lichtscheibe 4 hindurch in ihrer jeweiligen Auflichtfarbe zu erkennen. Werden die Elektrolumineszenzfolien 12 bis 15, 18 jedoch bestromt, dann ergibt sich ein Erscheinungsbild entsprechend Fig. 2a. Die Elektrolumineszenzfolie 18 ist hierbei so ausgebildet, daß das Licht nicht wie bei den Elektrolumineszenzfolien 12 bis 15 flächig abgestrahlt wird, sondern in Rasterpunkten 19.

Die Elektrolumineszenzfolien 12 bis 15, 18 können auch in die Lichtscheibe 4 integriert sein, wodurch ein optimaler Schutz der Elektrolumineszenzfolien erreicht wird.

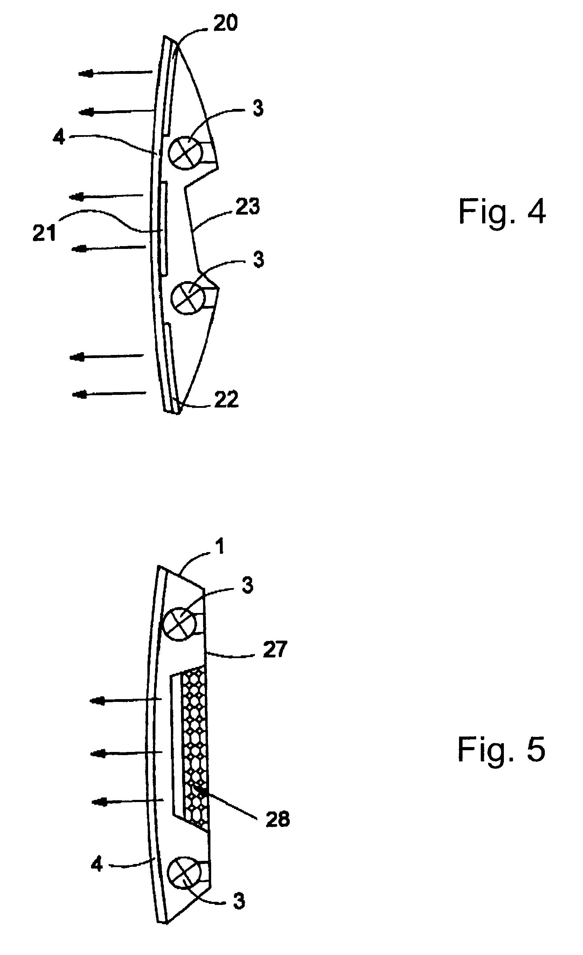

Bei der Ausführungsform nach Fig. 4 sitzen an der Innenseite der Lichtscheibe 4 Elektrolumineszenzfolien 20 bis 22 mit Abstand übereinander. Im Bereich zwischen benachbarten Elektrolumineszenzfolien befinden sich die Leuchtmittel 3, die auf einem Träger 23 befestigt sind. Das von den Leuchtmitteln 3 ausgesandte Licht strahlt im Bereich zwischen benachbarten Elektrolumineszenzfolien 20 bis 22 durch die Lichtscheibe 4 nach außen. Die Elektrolumineszenzfolien 20 bis 22 können jede Form haben, beispielsweise sich über die Breite der Heckleuchte erstrecken.

Fig. 5 zeigt ein Ausführungsbeispiel, bei dem die Elektrolumineszenzfolie 26 mit Abstand hinter der Lichtscheibe 4 angeordnet ist. Außerdem liegt die Elektrolumineszenzfolie 26 zwischen Leuchtmitteln 3, die mit Abstand oberhalb und unterhalb der Elektrolumineszenzfolie 26 im Gehäuse 1 angeordnet sind. Die Elektrolumineszenzfolie 26 ist hinterspritzt und auf der Innenseite des Bodens 27 des Gehäuses 1 gehalten. Der umspritzte Bereich 28 kann beispielsweise eine Platine enthalten, an die sowohl die Elektrolumineszenzfolie 26 als auch die Leuchtmittel 3 angeschlossen sind. Innerhalb der Umspritzung liegt diese Platine geschützt. Für die Leuchtmittel 3 können im Gehäuse 1 Reflektoren vorgesehen sein, die das von den Leuchtmitteln abgestrahlte Licht zur Lichtscheibe 4 reflektieren.

Der zum Betrieb der Elektrolumineszenzfolie 26 benötigte Inverter ist vorteilhaft auf der für die Leuchtmittel 3 notwendigen Platine vorgesehen. Dadurch besteht die Möglichkeit, mit engstem Bauraum homogene Konturen und flächige Bereiche an der Heckleuchte herzustellen.

Bei sämtlichen Ausführungsformen können durch die Kombination mit Pigmenten Effekte, wie beispielsweise Fluoreszenz- oder Glimmereffekte, eingestellt und die Lichtausbeute verstärkt sowie auch zusätzliche Lichteffekte realisiert werden.

## Patentansprüche

1. Leuchteneinheit, vorzugsweise Heckleuchte, für Fahrzeuge, vorzugsweise Kraftfahrzeuge, mit einem Gehäuse, in dem mindestens ein Leuchtmittel untergebracht ist, das hinter einer Lichtscheibe liegt, und mit wenigstens einer elektrolumineszierenden Schicht,
**dadurch gekennzeichnet, daß** die elektrolumineszierende Schicht (12 bis 15, 18, 20 bis 22) an der Lichtscheibe (4) vorgesehen ist.

2. Leuchteneinheit nach Anspruch 1,
**dadurch gekennzeichnet, daß** die elektrolumineszierende Schicht (12 bis 15, 18, 20 bis 22) an der Innenseite der Lichtscheibe (4) befestigt ist.

3. Leuchteneinheit nach Anspruch 1,
**dadurch gekennzeichnet, daß** die elektrolumineszierende Schicht (12 bis 15, 18, 20 bis 22) in die Lichtscheibe (4) integriert ist.

4. Leuchteneinheit nach einem der Ansprüche 1 bis 3,
**dadurch gekennzeichnet, daß** die elektrolumineszierende Schicht (12 bis 14) Streifenform hat.

5. Leuchteneinheit nach einem der Ansprüche 1 bis 4,
**dadurch gekennzeichnet, daß** mehrere elektrolumineszierende Schichten (12 bis 14, 20 bis 22) mit Abstand übereinander liegen.

6. Leuchteneinheit nach einem der Ansprüche 1 bis 3 oder 5,
**dadurch gekennzeichnet, daß** im Bereich zwischen elektrolumineszierenden Schichten (12 bis 14, 20 bis 22) die Leuchtmittel (2, 3) angeordnet sind.

7. Leuchteneinheit nach einem der Ansprüche 1 bis 3, 5 und 6,
**dadurch gekennzeichnet, daß** die elektrolumineszierende Schicht (15) als rechteckiges Flächenelement ausgebildet ist.

8. Leuchteneinheit nach einem der Ansprüche 1 bis 7,
**dadurch gekennzeichnet, daß** die elektrolumineszierende Schicht (12 bis 15, 20 bis 22) in eingeschaltetem Zustand flächig leuchtet.

9. Leuchteneinheit nach einem der Ansprüche 1 bis 7,
**dadurch gekennzeichnet, daß** die elektrolumineszierende Schicht (18) in eingeschaltetem Zustand in Form eines Punktrasters leuchtet.

10. Leuchteneinheit, insbesondere nach einem der Ansprüche 1 bis 9,
**dadurch gekennzeichnet, daß** die elektrolumineszierende Schicht (26) hinterspritzt ist.

11. Leuchteneinheit nach Anspruch 10,
**dadurch gekennzeichnet, daß** im hinterspritzten Bereich (28) eine Platine für die elektrolumineszierende Schicht (26) und das Leuchtmittel (2, 3) untergebracht ist.

12. Leuchteneinheit nach Anspruch 11,
**dadurch gekennzeichnet, daß** auf der Platine ein Inverter für die elektrolumineszierende Schicht (26) sitzt.

13. Leuchteneinheit nach einem der Ansprüche 10 bis 12,
**dadurch gekennzeichnet, daß** die elektrolumineszierende Schicht (26) zwischen benachbarten Leuchtmitteln (2, 3) angeordnet ist.

14. Leuchteneinheit nach einem der Ansprüche 1 bis 13,
**dadurch gekennzeichnet, daß** die elektrolumineszierende Schicht (12 bis 15, 18, 20 bis 22, 26) unabhängig vom Leuchtmittel (2, 3) ein- und/oder ausschaltbar ist.

15. Leuchteneinheit nach einem der Ansprüche 1 bis 14,
**dadurch gekennzeichnet, daß** das Leuchtmittel (2) eine Lampe ist.

16. Leuchteneinheit nach einem der Ansprüche 1 bis 14,
**dadurch gekennzeichnet, daß** das Leuchtmittel (3) eine LED ist.
